**Europäisches Patentamt**

(19) **European Patent Office**

**Office européen des brevets**

(11) Publication number : **0 317 230 B1**

(12) **EUROPEAN PATENT SPECIFICATION**

(45) Date of publication of patent specification :
22.03.95 Bulletin 95/12

(51) Int. Cl.⁶ : **G08B 3/10**

(21) Application number : **88310716.1**

(22) Date of filing : **14.11.88**

(54) **Paging receiver with a message selecting circuit.**

(30) Priority : **13.11.87 JP 286751/87**

(43) Date of publication of application :
**24.05.89 Bulletin 89/21**

(45) Publication of the grant of the patent :
**22.03.95 Bulletin 95/12**

(84) Designated Contracting States :
**DE GB NL**

(56) References cited :
**EP-A- 0 126 704**
**EP-A- 0 135 783**
**EP-A- 0 155 628**

(73) Proprietor : **NEC CORPORATION**
**7-1, Shiba 5-chome**
**Minato-ku**
**Tokyo (JP)**

(72) Inventor : **Ide, Motoki c/o NEC Corporation**
**33-1, Shiba 5-chome**
**Minato-ku Tokyo (JP)**

(74) Representative : **Orchard, Oliver John**
**JOHN ORCHARD & CO.**
**Staple Inn Buildings North**
**High Holborn**
**London WC1V 7PZ (GB)**

## Description

BACKGROUND OF THE INVENTION

The present invention relates to a paging receiver and, more particularly, to a paging receiver including a message selecting circuit.

Today, a paging receiver is extensively used not only for receiving an exclusive call but for receiving common information such as stock information. Specifically, the users of paging receivers own a common paging number for receiving a common information service. Stock information or similar common information transmitted from the service offerer (firm) is received by all of the receivers to which the common paging number is assigned.

A paging receiver used in the above-described manner has various drawbacks when called frequently at relatively short intervals such as for a stock price, exchange rate or similar information service, as enumerated below:

(1) Although a paging receiver of the type having a function of producing an alert in response to each call may promote timely confirmation of desired data, it requires troublesome manipulations for confirmation when applied to a system which originates a call every 30 seconds, for example. More specifically, it is necessary for the user of the receiver to see if common information received is the desired information every time such information arrives;

(2) Conversely, a paging receiver of the type memorizing only the latest information or all the information without producing any alert is apt to cause a person to miss the chance to see the time when the stock price has gone up above an expected level, for example.

There has previously been proposed, in European Patent Application No. 84109812.2 which was published under No. 135783, a radio communication apparatus, which may be a pager receiver, in which a predetermined signal, produced after a selectively received call signal, is used to inhibit or disable a receiving operation. Such an arrangement is particularly useful in suspending service should a receiver fall into the wrong hands.

A paging receiver to be described below allows a user of the receiver to readily select received common information and thereby to see only desired information immediately.

In one arrangement which will be described below, a receiving section of a paging receiver receives a paging number and a message which follows the paging number to produce a received paging number and a received message signal, respectively, a paging number storing section stores a paging number which is assigned to the receiver and is referred to as its own paging number, a paging number detecting section compares the received paging number and the own paging number, and, if the two paging numbers are identical, produces a coincidence signal and outputs the received message signal. A message decoding section decodes, in response to the coincidence signal, the received message and generates a decoded message signal, and a search condition setting section sets a search condition and notifies means associated with the search condition, respectively. A search condition decoding section decodes respectively the set search condition and the set notifying means and outputs respectively a decoded search condition and a decoded notifying means in the form of decoded condition signals, and a message selecting section searches, in response to the decoded message signal and the decoded condition signals, for the decoded message signal on the basis of the decoded search condition which is contained in the decoded condition signals and outputs searched message signal, the decoded message signal and a notifying signal which is representative of the notifying means associated with the searched message signal. A searched message storing section stores the searched message signal, and a notification control section for, generates in response to the searched message signal and the notifying signal from the message selecting section, a first drive signal and, in response to the searched message signal stored in the searched message storing section, generating a second drive signal. A switch commands the selection of one of the first and second drive signals which are generated by the notification control section. A display section displays the searched message signal in response to any of the first and second drive signals, and an alert generating section generates an alert signal in response to the first drive signal.

A known arrangement will be described below, together with embodiments which illustrate the present invention and which are given by way of example, with reference to the accompanying drawings, in which:

Fig. 1 is a schematic block diagram showing a paging receiver embodying the present invention;

Figs. 2A and 2B are flowcharts demonstrating the operation of a message searching section included in the receiver of Fig. 1;

Figs. 3A and 3B show an example of character information and an example of character search condition, respectively;

Figs. 4A and 4B show an example of alphanumeric information and an example of alphanumeric search condition, respectively;

Figs. 5A and 5B show a code format which is applicable to the present invention;

Figs. 6A to 6C show the alphanumeric information of Fig. 4A which is applied to the code format of Figs. 5A and 5B;

Fig. 7 is a schematic block diagram showing a paging receiver in general use; and

Fig. 8 is a schematic block diagram showing details of a message control section which is included in the prior art paging receiver.

DETAILED DESCRIPTION OF THE PREFERRED EMBODIMENTS

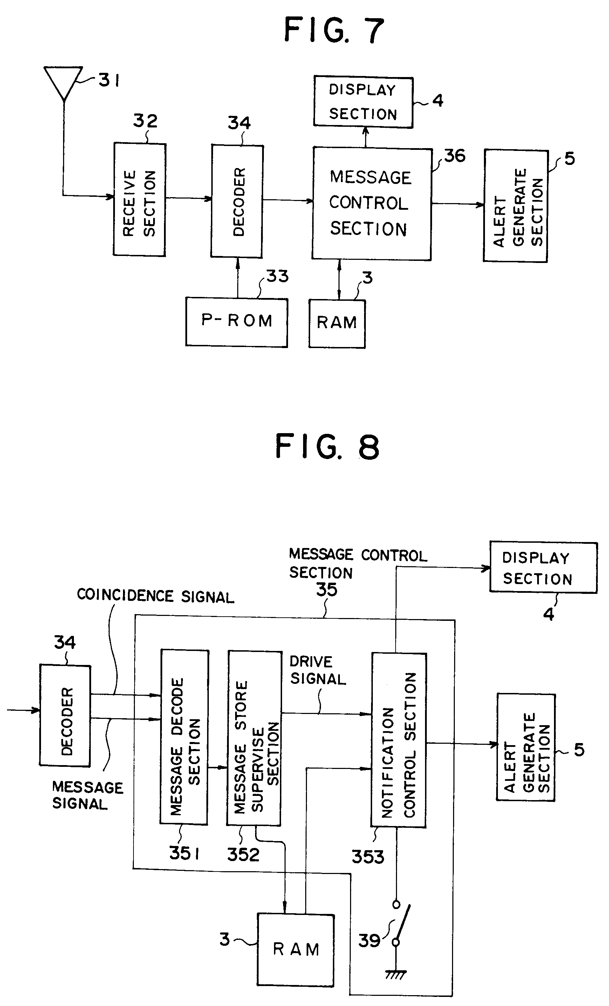

To better understand the present invention, a brief reference will be made to a prior art paging receiver, shown in Figs. 7 and 8.

An ordinary paging receiver shown in Fig. 7 includes a receiving section 32 for demodulating a signal coming in through an antenna 31, and a Programmable-Read Only Memory (P-ROM) 33 for storing a paging number assigned to the receiver. A decoder 34 detects a paging signal in synchronism with a frame synchronizing signal which is contained in the demodulated output of the receiving section 32, decodes the paging signal to produce a decoded paging number. Reading the receiver's paging number out of the P-ROM 33, the decoder 34 produces a coincidence signal if it is identical with the decoded paging number. Then, the decoder 34 transfers a message signal which follows the paging signal to a message control section 36. In response, the message control section 36 delivers drive signals to a display section 4 and an alert generating section 5. Upon reception of the drive signals, the sections 4 and 5 display the message generate an alert, respectively. The reference numeral 3 designates a random access memory (RAM) for storing a message as needed.

Referring to Fig. 8, a specific construction of message control section 35 of the prior art paging receiver is shown. In response to the coincidence signal from the decoder 34, a message decoding section 351 decodes the message signal and then supplies the decoded signal to a message store supervising section 352 at which the decoded signal is stored in a predetermined format. At the same time, a notification drive signal is fed from the message store supervising section 352 to an notification control section 353. In response, the control section 353 triggers the display section 4 and alert generating section 5 depending upon the status of a switch 39. More specifically, the display of a message on the display section 4 and the generation of an alert by the alert generating section 5 depends upon the operation of the switch 39. However, the prior art paging receiver with such a message control section is incapable of allowing the user to adopt or reject the message signal as desired, as discussed earlier.

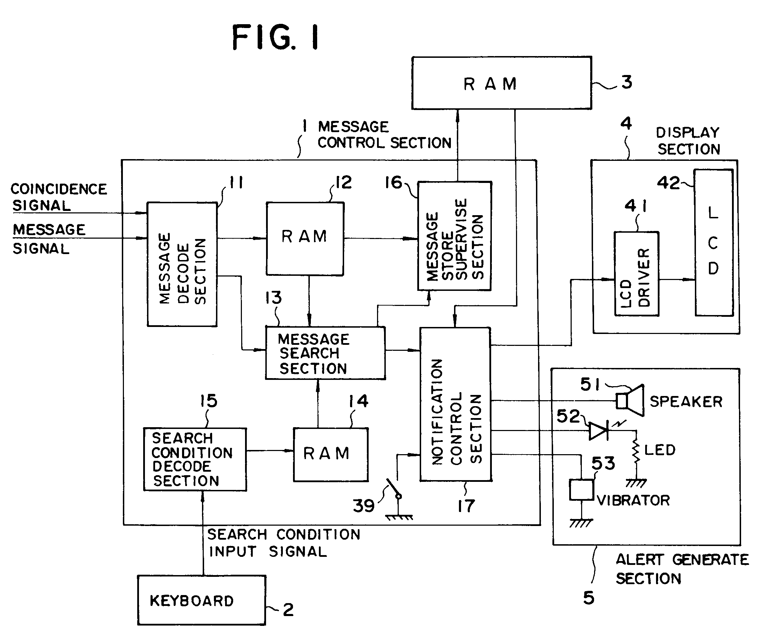

Referring to Fig. 1, a paging receiver embodying the present invention is shown and includes a message control circuit (section) 1 which is implemented by a 1-chip central processing unit (CPU). Connected to the message control circuit 1 are a keyboard 2, a RAM 3 for storing a message, a display section 4, and an alert generating section 5. The display section 4 is constituted by a liquid crystal display (LCD) 42 and an LCD driver 41 while the alert generating section 5 is comprised of a speaker 51, a light emitting diode (LED) 52, and a vibrator 53. It is to be noted that the message control circuit 1 is preceded by circuitry which includes the antenna 31, receiving section 32, P-ROM 33 and decoder 34 as shown in Fig. 7.

The message control circuit 1 includes a buffer RAM 12 for temporarily storing a message, a message searching section 13, and a RAM 14 for storing a search condition and an alerting means, in addition to the various blocks shown in Fig. 8. The message searching section 13, a message decoding section 11, a search condition decoding section 15, a message store supervising section 16 and a notification control section 17 are software blocks which may be implemented as a program of the centrol processing unit (CPU).

In operation, the message decoding section 11 of the message control circuit 1 decodes a message signal in response to a coincidence signal which is outputted by a decoder which precedes the message decoding section 11. The decoded message signal is temporarily stored in the RAM 12. The message signal lodged in the RAM 12 is searched by the message searching section 13 according to a search condition which has been stored in the RAM 14 beforehand in a predetermined format.

The search condition is entered on the keyboard 2 by the user as needed. The search condition is decoded by the search condition decoding section 15 and then stored in the RAM 14. Alert generating means such as speaker means, LED means or vibrator means is set via the keyboard 2 in addition to the search condition. Further entered on the keyboard 2 is whether or not to store a message received. The result of these settings are also decoded by the search condition decoding section 15 and then stored in the RAM 14.

The timing for the message searching section 13 to begin a search is provided by the message decoding section 11 in the form of a search start signal. More specifically, when messages are to be searched one after another, the search start signal is outputted timed to the entry of a message in the message decoding section 11; when they are to be searched on a group basis, the search start signal is produced timed to the end of a sequence of messages.

3

EP 0 317 230 B1

The message searching section 13 ends the condition search according to the condition set beforehand and directly delivers the result of search and a signal which designates notifying means associated with the result of search to the notification control section 17. When a message stored request is entered, the message searching section 13 feeds a message store request to the message store supervising section 16 and writes the content of the RAM 12 in the RAM 3 via the section 16 while feeding the result of search to the alert notification control section 17 as stated above. More specifically, the message store supervising section 16 reads out of the RAM 12 only a message for which the store request is meant and transfers it to the RAM 3.

Upon reception of the result of search and the particular notifying means, the notification control section 17 applies a first drive signal to the display section 4 and/or the alert generating section 5 with no regard to the status of a message read-out switch 39. Nevertheless, when the result of search is not fed from the message searching section 13 to the notification control section 17 and the switch 39 is conditioned to deliver a message read-out command, the notification control section 17 reads out the content of the RAM 3 and, based on it, delivers a second drive signal to the display section 4 only.

Any desired kind of combination of the display section 4 and alert generating section 5 which are responsive to the first drive signal may be entered on the keyboard 2. In response to the first or second drive signal, the display section 4 displays a message on the LCD 42 via the LCD driver 41. The alert generating section 5 received the first drive signal, more specifically the speaker 51, LED 52 or vibrator 53 received the drive signal which is associated with the particular alerting means entered on the keyboard 2, generates an alert.

As stated earlier, the keyboard 2 is available for the following purposes:

(1) setting a search condition (inclusive of no search condition) and notifying means;
(2) setting whether or not to store a message;
(3) setting ON/OFF of notifying means; and
(4) setting ON/OFF of display.

While keys for implementing the settings (3) and (4) have to be provided on a casing of the receiver from the practical use standpoint, keys for achieving the purposes (1) and (2) may either be provided on the casing or be implemented by a keyboard of an external terminal as desired. When use is made of an external terminal, it is of course necessary to provide the receiver body with a terminal for connection. By operating such a keyboard, the user is capable of changing the content of the RAM 14. The previously mentioned message read-out key 39 is provided on the receiver casing independently of the keys for implementing the settings (1) to (4).

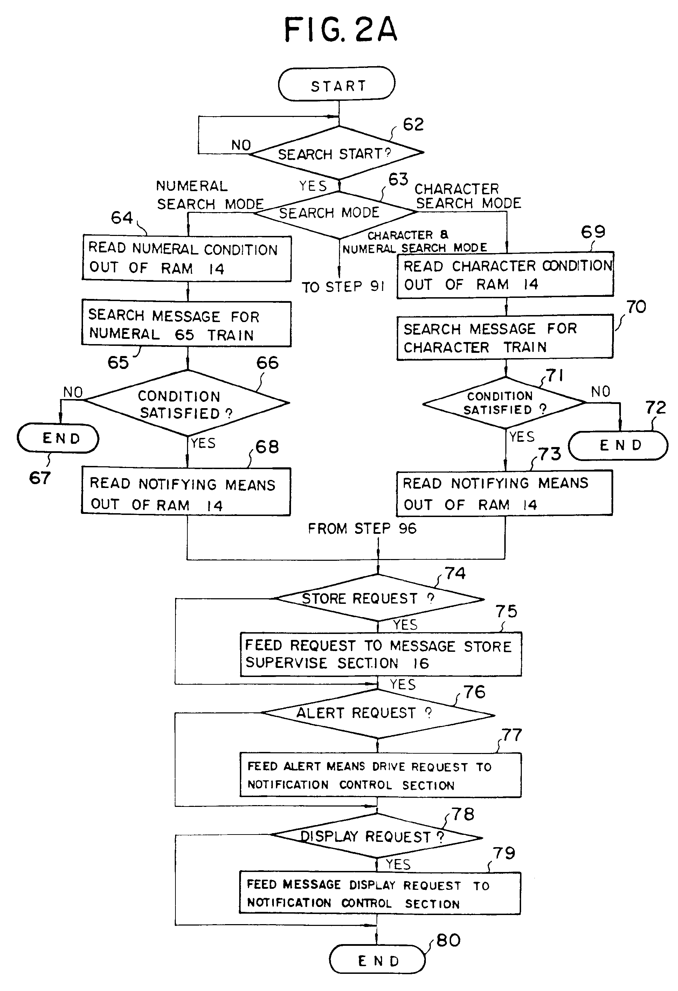

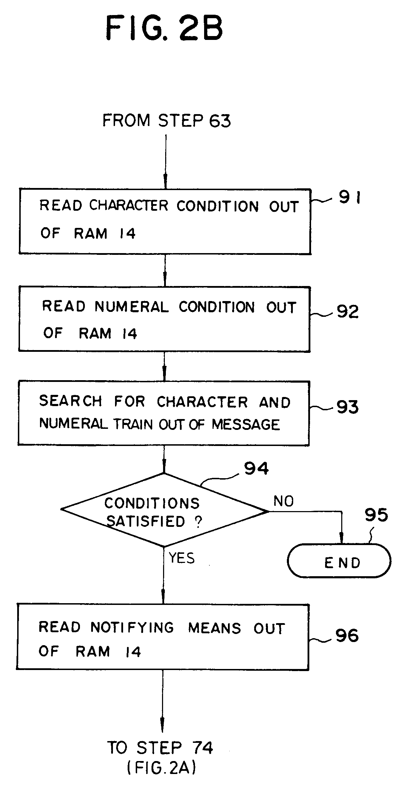

The operation of the message searching section 13 shown in Fig. 1 will now be described with reference to Figs. 2A and 2B. Examples of searches which the message searching section 13 may perform are as follows:

(1) determining whether or not a specified character train is included in a message;
(2) evaluating a value represented by a numerical data training which is included in a message; and
(3) searching for a specified character train and evaluating a value of a numerical data train which immediately follows the character train.

Operation flows representative of the above-mentioned three examples will be described hereinafter.

Referring to Fig. 2A, when a search start signal from the message decoding section 11 arrives in a step 62, the program advances to a step 63. So long as the search start signal does not arrive, the step 62 is repeated. If the search condition stored in the RAM 14 is a numeral search mode as decided in the step 63, a step 64 is executed for reading a numercal condition to be searched out of the RAM 14. This is followed by a step 65, i.e., searching for only a numerical data train out of the message from the RAM 12. At the next step 66, a numerical data train satisfying the above-mentioned numeral condition is searched for. If such a numerical data train is not found in the step 66, the program is transferred to a step 67 to end the processing. If a numerical data train satisfying the condition is found, a step 68 is executed for reading out from the RAM 14 particular notifying means which has been memorized on the basis of the previously stated search condition.

In the subsequent step 74, the presence/absence of a message store request is determined by checking the RAM 14. If a message store request is present, a message store request is delivered to the message store supervising section 16 at a step 75 and then a step 76 is executed. If such a request is absent the step 74 is immediately followed by the step 76. In the step 76, whether an alert generate request is present is decided on the basis of the content of the RAM 14 and, if it is present, the program advances to a step 77. In the step 77, a drive request meant for the alert generating means which has been selected by the step 68 and other steps associated therewith is fed to the notification control section 17, followed by a step 78. If the alert generate request is absent as decided in the step 76, the program is directly transferred to the step 78. In the step 78, if a display request associated with the display section 4 is present is decided by referencing the RAM 14 and, if it is present, a step 79 is executed for delivering a message display request to the notification control section 17. If the display request is absent, the operation advances directly to the step 80 to complete the processing.

4

If the search mode selected is a character search mode as decided in the step 63, substantially the same sequence of steps as the steps described above in relation to a numeral search mode are performed. Specifically, a step 69 is executed for reading a character condition to be searched out of the RAM 14. This is followed by a step 70, i.e., searching for only a character data train out of the message from the RAM 12. At the next step 71, a character data train satisfying the above-mentioned character condition is searched for. If such a character data train is not found in the step 71, the program is transferred to a step 72 to end the processing. If a character data train satisfying the condition is found, a step 73 is executed for reading out from the RAM 14 particular notifying means which has been memorized on the basis of the previously stated search condition. The step 73 is followed by the step 74 after which the same steps as the numerical search mode are executed.

Further, in an character and numeral search mode as decided in the step 63, the program is transferred to a step 91 shown in Fig. 2B for reading a character condition to be searched out of the RAM 14. In Fig. 2B, a step 92 is executed after the step 91 for reading a numerical condition out of the RAM 14. This is followed by a step 93 for searching for a character data train and a numeral data train out of the message stored in the RAM 12 and, then, by a step 94 for searching for a character data train and a numeral data train which satisfy both of the character and numerical conditions loaded in the RAM 14. In the next step 96, a notifying means associated with the searched character data train and numeral data train is read out of the RAM 14 and, then, a step 74 (Fig. 2A) is executed. If no character data train and numeral data train which satisfy the condition are not found in the step 94, the program is transferred to a step 95 to end the processing.

When no particular search condition is entered on the keyboard 2, the steps 91 to 96 shown in Fig. 2B are executed. In this case, a condition that all the character and numerical data train should be searched will be set in the step 94.

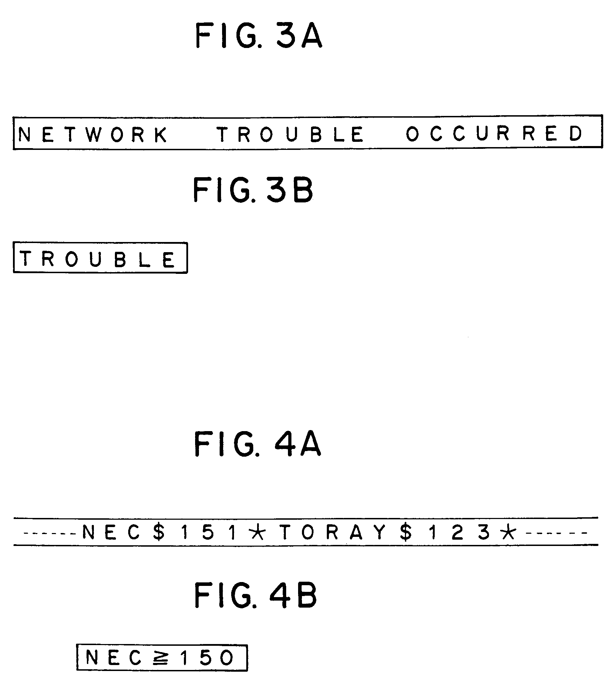

Referring to Figs. 3A, 3B, 4A and 4B, there are shown practical examples of a character message and a numerical message together with a method of searching them. Assume that a message information offerer (firm) transmits a message "NETWORK TROUBLE OCCURRED" shown in Fig. 3A for informing the user of the paging receiver of the occurrence of some trouble. The user, on the other hand, loads the receiver with a character condition "TROUBLE" to be searched for, as shown in Fig. 3B. In this condition, the receiver searches for a character data train "TROUBLE" out of a received message in the step 71 of the character search mode flow shown in Fig. 2. When the receiver has found the character data train "TROUBLE", it displays the message "NETWORK TROUBLE OCCURRED" and/or generates an alert.

On the other hand, assume that a stock information offerer (firm) offers the user of the paging receiver stock information such as shown in Fig. 4A, that the stock information is constituted by "stock or security name" and "stock price" which occur in this order, and that the stock or security name is variable in length while the stock price is preceded by a symbol "$" and followed by a symbol "*". In this case, the user of the receiver enters a character and numeral (alphanumeric) search conditions "NEC $\geqq$ 150" shown in Fig. 4B on the keyboard 2. Then, the receiver searches the stock information in the step 94 of the character and numeral search flow shown in Fig. 2B. More specifically, the receiver searches for the stock name "NEC" and then, based on the numerical search condition " $\geqq$ 150", the stock price "150" which is sandwiched between the symbols "$" and "*", out of the received stock information. Since the stock name "NEC" and stock price "151" satisfy the search condition "NEC" and "$\geqq$ 150", respectively, the receiver displays the message "NEC $150*", produces an alert and/or stores the message in the memory.

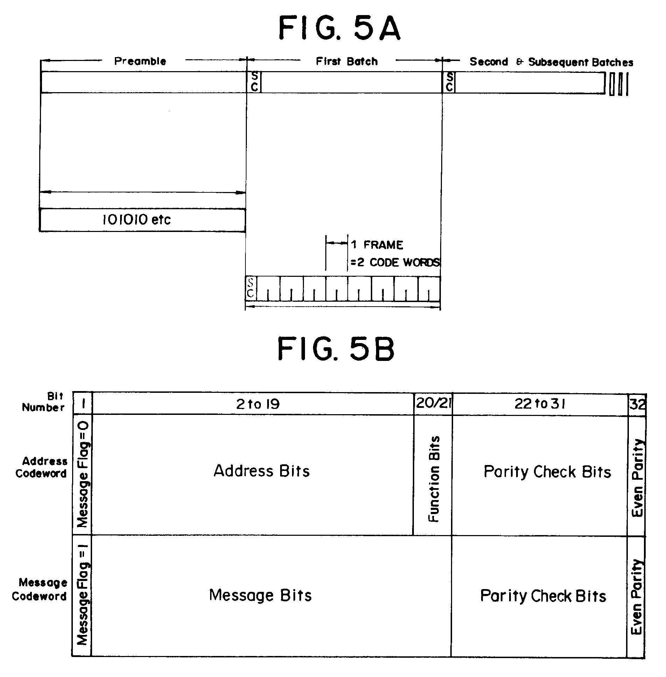

As regards the signal format for the transmission of a character and numeral message, the illustrative embodiment uses POCSAG Digital Paging Signal format which is well known in the art. As shown in Fig. 5A, this kind of signal consists of a preamble having at least 576 bits of repetitive ONEs and ZEROs and at least one, usually a plurality of, batches which follow the preamble and are associated with the amount of message information transmitted. Each batch begins with one codeword of SC (Synchronization Codeword) and has sixteen codewords (i.e. eight frames) which follow the SC.

Fig. 5B shows the format of a codeword mentioned above. As shown, thirty-two bits are assigned to one codeword. Concerning an address code word, a message flag is assigned to a bit No. 1, address bits adapted for a paging number are assigned to bit Nos. 2 to 9, function bits are assigned to bit Nos. 20 and 21, parity check bits are assigned to bit Nos. 22 to 31, and an even parity bit is assigned to a bit No. 32. In the case of a message codeword, a message flag, message bits, parity check bits and even parity bit are assigned to the bit No. 1, bit Nos. 2 to 21, bit Nos. 22 to 31 and bit No. 32, respectively.

The stock information stated earlier, for eaxmple, is assigned to the message codeword. Fits. 6A to 6C shown bit arrangements for transmitting stock information, taking the stock information of Fig. 4A for example. Let it be assumed that the message characters showing the stock name and price are implemented by an alphanumeric character set shown in Table 1 below (ASCII 7-bit code; CCITT international alphabet No. 5).

Table 1

| Bit No.7 | | 0 | 0 | 0 | 0 | 1 | 1 | 1 | 1 |
|---|---|---|---|---|---|---|---|---|---|
| Bit No. 6 | | 0 | 0 | 1 | 1 | 0 | 0 | 1 | 1 |
| Bit No.  5 | | 0 | 1 | 0 | 1 | 0 | 1 | 0 | 1 |
| Bit No.  4321 | | | | | | | | | |
| | 0000 | NUL | DLE | SP | 0 | @ | P | | p |
| | 0001 | SOH | DC1 | ! | 1 | A | Q | a | q |
| | 0010 | STX | DC2 | " | 2 | B | R | b | r |
| | 0011 | ETX | DC3 | # | 3 | C | S | c | s |
| | 0100 | EOT | DC4 | $ | 4 | D | T | d | t |
| | 0101 | ENQ | NAK | % | 5 | E | U | e | u |
| | 0110 | ACK | SYN | & | 6 | F | V | f | v |
| | 0111 | BEL | ETB | ' | 7 | G | W | g | w |
| | 1000 | BS | CAN | ( | 8 | H | X | h | x |
| | 1001 | HT | EM | ) | 9 | I | Y | i | y |
| | 1010 | LF | SUB | * | : | J | Z | j | z |
| | 1011 | VT | ESC | + | ; | K | [ | k | |
| | 1100 | FF | IS(FS) | , | | L | | l | |
| | 1101 | CR | IS(GS) | – | = | M | ] | m | |
| | 1110 | SO | IS(RS) | . | | N | | n | |
| | 1111 | SI | IS(US) | / | ? | O | | o | DEL |

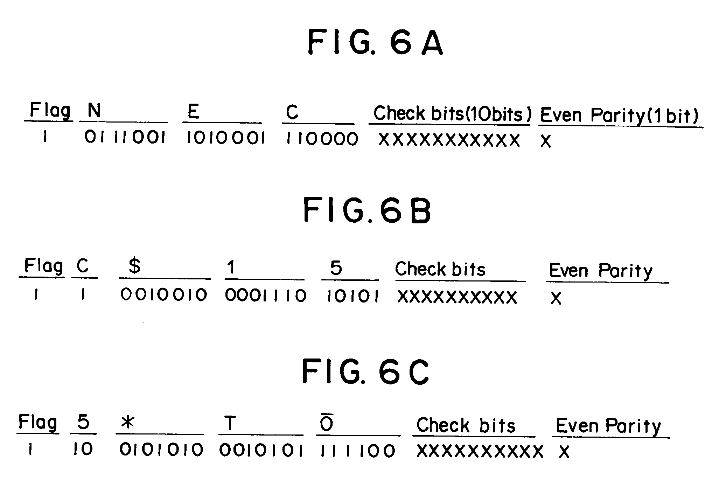

Figs. 6A, 6B, and 6C show respectively the bit construction of a first message in a frame 1 of the first batch, the bit construction of a second message in a frame 2 of the first btach, and the bit construction of a third message codeword in the frame 2 of the first batch.

In summary, in accordance with the present invention, a message received by a paging receiver is compared on the basis of a particular condition set by a user of the receiver so that the storage of the message in a memory, generation of an alert and the like are controlled depending upon the result of comparison. This allows the user to readily select and therefore immediately see only desired one of incoming information. Especially, when the receiver receives information which is offered to many and unspecified users such as stock there can be realized a function of storing only a message containing only a desired issue, a function of energizing a speaker only when the price of a desired strock or security has gone up beyond a certain price, and function of simply storing a message in other conditions.

## Claims

1. A paging receiver including receiving means (32) for receiving a paging number and a message which follows the paging number to produce a received paging number and a received message signal, respectively, paging number storing means (33) for storing its own paging number that is assigned to the receiver, paging number detecting means (34) for comparing the received paging number and its own paging number, and, if the two paging numbers are identical, producing a coincidence signal and outputting the received message signal, message control means (1) for processing the decoded message signal, the message control means including message decoding means (11) for decoding, in response to the coincidence signal, the received message and generating a decoded message signal, display means (4) for displaying the received message, and alert generating means (5) for generating an alert signal, characterised in that the paging receiver further includes search condition setting means (2) for setting a search condition and notifying means associated with the search condition, respectively, both the search condition and the notifying means being determined by the user of the paging receiver, in that the message control means (1) further includes search condition decoding means (15) for decoding the set search condition and the set notifying means and outputting the set search condition and the notifying means as a decoded search condition signal and a decoded notifying means signal, message selecting means (13) for searching, in response to the decoded message signal, for the decoded message signal on the basis of the decoded condition signal and outputting, as a searched message signal, the decoded message signal and a notifying signal which is representative of the notifying means associated with the searched message signal, searched message storing means (3) for storing the searched message signal, notification control means (17) for generating in response to the searched message signal and the notifying signal from the message selecting means a first drive signal and, in response to the searched message signal stored in the searched message storing means, a second drive signal, and switching means (39) for commanding the selection of one of the first and second drive signals which are generated by the notification control means, and in that the display means (4) displays the searched message signal in response to one of the first and second drive signals, and the alert generating means generates an alert signal in response to the first drive signal.

2. A paging receiver as claimed in claim 1, characterised in that the display means (4) includes a liquid crystal display (42) which displays the message in response to the first or second drive signal.

3. A paging receiver as claimed in claim 1, characterised in that the alert generating means (5) includes a speaker (51) which sounds in response to the first drive signal.

4. A paging receiver as claimed in claim 1, characterised in that the alert generating means (5) includes a light emitting diode (52) which emits light in response to the first drive signal.

5. A paging receiver as claimed in claim 1, characterised in that the alert generating means (5) includes a vibrator (53) which vibrates in response to the first drive signal.

6. A paging receiver as claimed in claim 1, characterised in that the search condition setting means (2) includes a keyboard circuit (2) built in a body of the receiver.

7. A paging receiver as claimed in claim 1, characterised in that the search condition setting means (2) includes a keyboard (2) which is mounted on an external terminal.

8. A paging receiver including receiving means (32) for receiving a paging number and a message which follows the paging number to produce a received paging number and a received message signal, respectively, paging number storing means (33) for storing its own paging number that is assigned to the receiver, paging number detecting means (34) for comparing the received paging number and its own paging number, and, if the two paging numbers are identical, producing a coincidence signal and outputting the received message signal, message control means (1) for processing the decoded message, the message control means including message decoding means (11) for decoding, in response to the coincidence signal, the received message and generating a decoded message signal, and alert or display means (4, 5) for indicating the reception of the message, characterised in that the paging receiver further includes search condition setting means (2) for setting a search condition and notifying means associated with the search condition, respectively, both the search condition and the notifying means being determined by the user of the paging receiver, and in that the message control means (1) further includes search condition decoding means (15) for decoding the set search condition and the set notifying means and outputting the set search condition and the notifying means as a decoded search condition signal and a decoded notifying means signal, message selecting means (13) for searching, in response to the decoded message signal, for the decoded message signal on the basis of the decoded condition signal and for producing a searched message signal which satisfies the search condition and a notifying signal which is representative of the notifying means associated with the searched message signal, and means (17) for performing one of displaying a message in the display means and generating an alert signal from the alert means in response to the searched message signal and the notifying signal.

9. A paging receiver including receiving means (32) for receiving a paging number and a message signal which follows the paging number to produce a received paging number and a received message signal, respectively, first search condition means (33) loaded with its own paging number that is assigned to the receiver, first detecting means (34) for comparing the received paging number and its own paging number and, if the two paging numbers are identical, outputting the received message signal, and alert or display means (4, 5) for indicating the reception of the message, characterised in that the paging receiver further includes input means (2) for inputting a specific search condition, relative to the message signal, which is determined by the user of the paging receiver, second search condition means (14) for storing the specific search condition for searching for the message signal, second detecting means (13) for comparing the received message signal and the specific search condition to detect a message signal which satisfies the specific search condition and outputting the detected message signal as a control signal, and means (17) for performing one of displaying the received message and the generating of an alert signal in the alert or display means in response to the control signal.

**Patentansprüche**

1. Personenrufempfänger mit einer Empfangseinrichtung (32) zum Empfangen einer Personenrufnummer und einer Nachricht, die auf die Personenrufnummer folgt, um eine empfangene Personenrufnummer bzw. ein empfangenes Nachrichtensignal zu erzeugen, einer Rufnummernspeichereinrichtung (33) zum Speichern seiner eigenen Personenrufnummer, die dem Empfänger zugeordnet ist, einer Personenrufnummerermittlungseinrichtung (34) zum Vergleichen der empfangenen Personenrufnummer mit seiner eigenen Rufnummer und, wenn die beiden Personenrufnummern identisch sind, zum Erzeugen eines Koinzidenzsignals und Ausgeben des empfangenen Nachrichtensignals, einer Nachrichtensteuereinrichtung (1) zum Verarbeiten des decodierten Nachrichtensignals, wobei die Nachrichtensteuereinrichtung eine Nachrichtendecodiereinrichtung (11) aufweist zum Decodieren, als Antwort auf das Koinzidenzsignal, der empfangenen Nachricht und zum Erzeugen eines decodierten Nachrichtensignals, einer Anzeigeeinrichtung (4) zum Anzeigen der empfangenen Nachricht und einer Hinweissignalerzeugungseinrichtung (5) zum Erzeugen eines Hinweissignals, dadurch gekennzeichnet, daß der Personenrufempfänger ferner eine Suchbedienungseinstelleinrichtung (2) aufweist zum Einstellen einer Suchbedingung bzw. einer Benachrichtigungseinrichtung, die mit der Suchbedingung in Zusammenhang steht, wobei sowohl die Suchbedingung als auch die Benachrichtigungseinrichtung vom Benutzer des Personenrufempfängers bestimmt wird, daß die Nachrichtensteuereinrichtung (1) ferner aufweist: eine Suchbedingungsdecodiereinrichtung (15) zum Decodieren der eingestellten Suchbedingung und der eingestellten Benachrichtigungseinrichtung und zum Ausgeben der eingestellten Suchbedingung und der Benachrichtigungseinrichtung als decodiertes Suchbedingungssignal und decodiertes Benachrichtungseinrichtungssignal, eine Nachrichtenauswahleinrichtung (13) zum Suchen, als Antwort auf das decodierte Nachrichtensignal, nach dem decodierten Nachrichtensignal auf der Grundlage des decodierten Bedingungssignals und zum Ausgeben, als gesuchtes Nachrichtensignal, des decodierten Nachrichtensignals und eines Benachrichtigungssignals, das die Benachrichtigungseinrichtung darstellt, die mit dem gesuchten Nachrichtensignal in Zusammenhang steht, eine Speichereinrichtung für gesuchte Nachrichten (3) zum Speichern des gesuchten Nachrichtensignals, eine Benachrichtigungssteuereinrichtung (17) zum Erzeugen, als Antwort auf das gesuchte Nachrichtensignal und das Benachrichtigungssignal von der Nachrichtenauswahleinrichtung, eines ersten Treibsignals und, als Antwort auf das gesuchte Nachrichtensignal, das in der Speichereinrichtung für gesuchte Nachrichten gespeichert ist, eines zweiten Treibsignals, und eine Umschalteinrichtung (39) zum Befehlen der Auswahl eines, nämlich des ersten oder des zweiten Treibsignals, die von der Benachrichtungssteuereinrichtung erzeugt werden, und daß die Anzeigeeinrichtung (4) das gesuchte Nachrichtensignal als Antwort auf eines, nämlich das erste oder das zweite Treibsignal, anzeigt und die Hinweissignalerzeugungseinrichtung ein Hinweissignal als Antwort auf das erste Treibsignal erzeugt.

2. Personenrufempfänger nach Anspruch 1, dadurch gekennzeichnet, daß die Anzeigeeinrichtung (4) eine Flüssigkristallanzeige (42) aufweist, die die Nachricht als Antwort auf das erste oder das zweite Treibsignal anzeigt.

3. Personenrufempfänger nach Anspruch 1, dadurch gekennzeichnet, daß die Hinweissignalerzeugungseinrichtung (5) einen Lautsprecher (51) aufweist, der als Antwort auf das erste Treibsignal ertönt.

4. Personenrufempfänger nach Anspruch 1, dadurch gekennzeichnet, daß die Hinweissignalerzeugungseinrichtung (5) eine lichtemittierende Diode (52) aufweist, die als Antwort auf das erste Treibsignal Licht emittiert.

5. Personenrufempfänger nach Anspruch 1, dadurch gekennzeichnet, daß die Hinweissignalerzeugungseinrichtung (5) einen Summer (53) aufweist, der als Antwort auf das erste Treibsignal vibriert.

6. Personenrufempfänger nach Anspruch 1, dadurch gekennzeichnet, daß die Suchbedingungseinstelleinrichtung (2) eine Tastaturschaltung (2) aufweist, die in ein Gehäuse des Empfängers eingebaut ist.

7. Personenrufempfänger nach Anspruch 1, dadurch gekennzeichnet, daß die Suchbedingungseinstelleinrichtung (2) eine Tastatur (2) aufweist, die an einem externen Anschluß angeordnet ist.

8. Personenrufempfänger mit einer Empfangseinrichtung (32) zum Empfangen einer Personenrufnummer und einer Nachricht, die auf die Personenrufnummer folgt, um eine empfangene Personenrufnummer bzw. ein empfangenes Nachrichtensignal zu erzeugen, einer Personenrufnummernspeichereinrichtung (33) zum Speichern seiner eigenen Personenrufnummer, die dem Empfänger zugeordnet ist, einer Personenrufnummerermittlungseinrichtung (34) zum Vergleichen der empfangenen Personenrufnummer mit seiner eigenen Personenrufnummer und, wenn die zwei Personenrufnummern identisch sind, zum Erzeugen eines Koinzidenzsignals und zum Ausgeben des empfangenen Nachrichtensignals, einer Nachrichtensteuereinrichtung (1) zum Verarbeiten der decodierten Nachricht, wobei die Nachrichtensteuereinrichtung aufweist: eine Nachrichtendecodiereinrichtung (11) zum Decodieren, als Antwort auf das Koinzidenzsignal, der empfangenen Nachricht und zum Erzeugen eines decodierten Nachrichtensignals und eine Hinweissignal- oder Anzeigeeinrichtung (4, 5) zum Anzeigen des Empfangs der Nachricht, dadurch gekennzeichnet, daß der Personenrufempfänger ferner eine Suchbedingungseinstelleinrichtung (2) aufweist zum Einstellen einer Suchbedingung und einer Benachrichtigungseinrichtung, die mit der Suchbedingung in Zusammenhang steht, wobei sowohl die Suchbedingung als auch die Benachrichtigungseinrichtung vom Benutzer des Personenrufempfängers bestimmt werden, und daß die Nachrichtensteuereinrichtung (1) ferner aufweist: eine Suchbedingungsdecodiereinrichtung (15) zum Decodieren der eingestellten Suchbedingung und der eingestellten Benachrichtigungseinrichtung und zum Ausgeben der eingestellten Suchbedingung und der Benachrichtigungseinrichtung als decodiertes Suchbedingungssignal und decodiertes Benachrichtigungseinrichtungssignal, eine Nachrichtenauswahleinrichtung (13) zum Suchen, als Antwort auf das decodierte Nachrichtensignal, nach dem decodierten Nachrichtensignal auf der Grundlage des decodierten Bedingungssignals und zum Erzeugen eines gesuchten Nachrichtensignals, das die Suchbedingung erfüllt, und eines Benachrichtigungssignals, das die Benachrichtigungseinrichtung darstellt, die mit dem gesuchten Nachrichtensignal in Zusammenhang steht, und eine Einrichtung (17) zum Durchführen eines Vorgangs, nämlich des Anzeigens einer Nachricht in der Anzeigeeinrichtung oder des Erzeugens eines Hinweissignals von der Hinweissignaleinrichtung, als Antwort auf das gesuchte Nachrichtensignal und das Benachrichtigungssignal.

9. Personenrufempfänger mit einer Empfangseinrichtung (32) zum Empfangen einer Personenrufnummer und eines Nachrichtensignals, das auf die Personenrufnummer folgt, um eine empfangene Personenrufnummer bzw. ein empfangenes Nachrichtensignal zu erzeugen, einer ersten Suchbedingungseinrichtung (33), die mit seiner eigenen Personenrufnummer geladen wird, die dem Empfänger zugeordnet ist, einer ersten Ermittlungseinrichtung (34) zum Vergleichen der empfangenen Personenrufnummer mit seiner eigenen Personenrufnummer und, wenn die beiden Personenrufnummern identisch sind, zum Ausgeben des empfangenen Nachrichtensignals, und einer Hinweissignal- oder Anzeigeeinrichtung (4, 5) zum Anzeigen des Empfangs der Nachricht, dadurch gekennzeichnet, daß der Personenrufempfänger ferner aufweist: eine Eingabeeinrichtung (2) zum Eingeben einer spezifischen Suchbedingung, bezogen auf das Nachrichtensignal, die vom Benutzer des Personenrufempfängers bestimmt wird, eine zweite Suchbedingungseinrichtung (14) zum Speichern der spezifischen Suchbedingung zum Suchen nach dem Nachrichtensignal, eine zweite Ermittlungseinrichtung (13) zum Vergleichen des empfangenen Nachrichtensignals mit der spezifischen Suchbedingung, um ein Nachrichtensignal zu ermitteln, das die spezifische Suchbedingung erfüllt, und zum Ausgeben des ermittelten Nachrichtensignals als Steuersignal, und eine Einrichtung (17) zum Durchführen eines Vorgangs, nämlich des Anzeigens der empfangenen Nachricht oder des Erzeugens eines Hinweissignals in der Hinweissignal- oder Anzeigeeinrichtung, als Antwort auf das Steuersignal.

**Revendications**

1. Récepteur d'appel de personne comportant un moyen de réception (32) pour recevoir un numéro d'appel et un message qui suit le numéro d'appel afin de produire un numéro d'appel reçu et un signal de message reçu, respectivement, un moyen de mémorisation de numéro d'appel (33) pour mémoriser le propre numéro d'appel affecté au récepteur, un moyen de détection de numéro d'appel (34) pour comparer le numéro d'appel reçu et son propre numéro d'appel et, si les deux numéros d'appel sont identiques, produire un signal de coïncidence et sortir le signal de message reçu, un moyen de commande de message (1) pour traiter le signal de message décodé, le moyen de commande de message comportant un moyen de décodage de message (11) pour décoder le message reçu, en réponse au signal de coïncidence, et produire un signal de message décodé, un moyen d'affichage (4) pour afficher le message reçu et un moyen de génération d'avertissement (5) pour produire un signal d'avertissement caractérisé en ce que le récepteur d'appel de personne comporte de plus un moyen d'établissement de condition de recherche (2) pour établir une condition de recherche et un moyen de notification associé à la condition de recherche, respectivement, la condition de recherche et le moyen de modification étant tous deux déterminés par l'utilisateur du récepteur d'appel de personne, en ce que le moyen de commande de message (1) comporte de plus un moyen de décodage de condition de recherche (15) pour décoder la condition de recherche établie et le moyen de notification établi, et sortir la condition de recherche établie et le moyen de notification sous la forme d'un signal de condition de recherche décodé et d'un signal de moyen de notification décodé, un moyen de sélection de message (13), pour rechercher, en réponse au signal de message décodé, le signal de message décodé, sur la base du signal de condition décodé et sortir, comme signal de message recherché, le signal de message décodé et un signal de notification qui est représentatif du moyen de notification associé au signal de message recherché, un moyen de mémorisation de message recherché (3) pour mémoriser le signal de message recherché, un moyen de commande de notification (17) pour produire en réponse au signal de message recherché et au signal de notification provenant du moyen de sélection de message, un premier signal d'attaque et, en réponse au signal de message recherché mémorisé dans le moyen de mémorisation de message recherché, un second signal d'attaque et un moyen de commutation (39) pour ordonner la sélection de l'un des premier et second signaux d'attaque qui sont produits par le moyen de commande de notification et en ce que le moyen d'affichage (4) affiche le signal de message recherché en réponse à un des premier et second signaux d'attaque et le moyen de génération d'avertissement produit un signal d'avertissement en réponse au premier signal d'attaque.

2. Récepteur d'appel de personne selon la revendication 1, caractérisé en ce que le moyen d'affichage (4) comporte un affichage à cristaux liquides (42) qui affiche le message en réponse aux premier ou second signaux d'attaque.

3. Récepteur d'appel de personne selon la revendication 1, caractérisé en ce que le moyen de génération d'avertissement (5) comporte un haut-parleur (51) qui émet un son en réponse au premier signal d'attaque.

4. Récepteur d'appel de personne selon la revendication 1, caractérisé en ce que le moyen de génération d'avertissement (5) comporte une diode électroluminescente (52) qui émet la lumière en réponse au premier signal d'attaque.

5. Récepteur d'appel de personne selon la revendication 1, caractérisé en ce que le moyen de génération d'avertissement (5) comporte un vibreur (53) qui vibre en réponse au premier signal d'attaque.

6. Récepteur d'appel de personne selon la revendication 1, caractérisé en ce que le moyen d'établissement de condition de recherche (2) comporte un circuit de clavier (2) incorporé dans un corps de récepteur.

7. Récepteur d'appel de personne selon la revendication 1, caractérisé en ce que le moyen d'établissement de condition de recherche (2) comporte un clavier (2) qui est monté sur un terminal externe.

8. Récepteur d'appel de personne comportant un moyen de réception (32) pour recevoir un numéro d'appel et un message qui suit le numéro d'appel afin de produire un numéro d'appel reçu et un signal de message reçu, respectivement, un moyen de mémorisation de numéro d'appel (33) pour mémoriser le propre numéro d'appel affecté au récepteur, un moyen de détection de numéro d'appel (34) pour comparer les numéros d'appel reçus et son propre numéro d'appel et, si les deux numéros d'appels sont identiques, produire un signal de coïncidence et sortir le signal de message reçu, un moyen de commande de message (1) pour traiter le message décodé, le moyen de commande de message comportant un moyen de décodage de message (11) pour décoder, en réponse au signal de coïncidence, le message reçu et produire un signal de message décodé et un moyen d'avertissement ou d'affichage (4, 5) pour indiquer la réception du message, caractérisé en ce que le récepteur d'appel de personne comporte de plus un moyen d'établissement de condition de recherche (2) pour établir une condition de recherche et un moyen de notification associé à la condition de recherche, respectivement, la condition de recherche et le moyen de notification étant tous deux déterminés par l'utilisateur du récepteur d'appel, et en ce que le moyen de commande de message (1) comporte de plus un moyen de décodage de condition de recherche (15) pour décoder la condition de recherche établie et le moyen de notification établi et sortir la condition de recherche établie et le moyen de notification comme signal de condition de recherche décodé et signal de moyen de notification décodé, un moyen de sélection de message (13) pour rechercher en réponse au signal de message décodé, le signal de message décodé sur la base du signal de condition décodé pour produire un signal de message recherché qui satisfait la condition de recherche et un signal de notification qui est représentatif du moyen de notification associé au signal de message recherché et un moyen (17) pour effectuer soit l'affichage d'un message sur le moyen d'affichage, soit produire un signal d'avertissement à partir du moyen d'avertissement en réponse au signal de message recherché et au signal de notification.

9. Récepteur d'appel de personne comportant un moyen de réception (32) pour recevoir un numéro d'appel et un message qui suit le numéro d'appel afin de produire un numéro d'appel reçu et un signal de message reçu, respectivement, un premier moyen de condition de recherche (33) chargé avec son propre numéro d'appel affecté au récepteur, un premier moyen de détection (34) pour comparer le numéro d'appel reçu et son propre numéro d'appel et, si les deux numéros d'appel sont identiques, sortir le signal de message reçu et un moyen d'avertissement ou d'affichage (4, 5) pour indiquer la réception du message, caractérisé en ce que le récepteur d'appel de personne comporte de plus un moyen d'entrée (2) pour entrer une condition de recherche spécifique, relative au signal de message qui est déterminé par l'utilisateur du récepteur d'appel de personne, un second moyen de condition de recherche (14) pour mémoriser la condition de recherche spécifique pour rechercher le signal de message, un second moyen de détection (13) pour comparer le signal de message reçu et la condition de recherche spécifique afin de détecter un signal de message qui satisfait la condition de recherche spécifique et sortir le signal de message détecté comme un signal de commande, et un moyen (17) pour effectuer soit l'affichage du message reçu, soit la production d'un signal d'avertissement dans le moyen d'avertissement ou d'affichage en réponse au signal de commande.

# FIG. 1

FIG. 1 — Block diagram showing RAM (3), MESSAGE CONTROL SECTION (1), DISPLAY SECTION (4), ALERT GENERATE SECTION (5), and KEYBOARD (2). The MESSAGE CONTROL SECTION contains MESSAGE DECODE SECTION (11), RAM (12), MESSAGE STORE SUPERVISE SECTION (16), MESSAGE SEARCH SECTION (13), SEARCH CONDITION DECODE SECTION (15), RAM (14), and NOTIFICATION CONTROL SECTION (17). Inputs include COINCIDENCE SIGNAL, MESSAGE SIGNAL, and SEARCH CONDITION INPUT SIGNAL. The DISPLAY SECTION contains LCD DRIVER (41) and LCD (42). The ALERT GENERATE SECTION contains SPEAKER (51), LED (52), and VIBRATOR (53). Switch 39 connects to the NOTIFICATION CONTROL SECTION (17).

# FIG. 2A

```
                    ┌──────────┐
                    │  START   │
                    └────┬─────┘
                         │
         ┌───────────────▼──────────────┐
    NO   ◇          SEARCH START ?      ◇ 62
    ┌────◇                              ◇
    │    └───────────────┬──────────────┘
    │              YES   │
    │                    │          63
  NUMERAL          ┌─────▼──────┐    CHARACTER
  SEARCH MODE      ◇ SEARCH MODE◇────SEARCH MODE
    64   ┌─────────◇            ◇───────────┐
         │         └─────┬──────┘           │    69
 ┌───────▼────────┐      │            ┌─────▼──────────┐
 │READ NUMERAL    │  CHARACTER &      │READ CHARACTER  │
 │CONDITION       │  NUMERAL SEARCH   │CONDITION       │
 │OUT OF RAM 14   │  MODE             │OUT OF RAM 14   │
 └───────┬────────┘      │            └─────┬──────────┘
         │          TO STEP 91              │    70
 ┌───────▼────────┐                   ┌─────▼──────────┐
 │SEARCH MESSAGE  │                   │SEARCH MESSAGE  │
 │FOR NUMERAL 65  │                   │FOR CHARACTER   │
 │TRAIN           │                   │TRAIN           │
 └───────┬────────┘                   └─────┬──────────┘
    65          66                       71           NO
 ┌──────▼─────────┐                   ┌─────▼──────────┐
NO◇  CONDITION    ◇                   ◇  CONDITION     ◇───┐
┌─◇  SATISFIED ?  ◇                   ◇  SATISFIED ?   ◇   │ 72
│ └──────┬─────────┘                  └─────┬──────────┘   │
│   YES  │      68                     YES  │   73    ┌────▼──┐
┌─▼──┐┌──▼─────────┐                  ┌─────▼──────┐  │ END   │
│END ││READ        │                  │READ        │  └───────┘
└────┘│NOTIFYING   │                  │NOTIFYING   │
 67   │MEANS OUT   │                  │MEANS OUT   │
      │OF RAM 14   │                  │OF RAM 14   │
      └──────┬─────┘                  └─────┬──────┘
             │      FROM STEP 96            │
             └──────────┬──────────────────┘
                        │        74
                  ┌─────▼──────┐
            ┌─────◇STORE REQUEST?◇
            │     └─────┬──────┘
            │      YES  │    75
            │     ┌─────▼──────────────┐
            │     │FEED REQUEST TO     │
            │     │MESSAGE STORE       │
            │     │SUPERVISE SECTION 16│
            │     └─────┬──────────────┘
            │      YES  │    76
            ├─────┌─────▼──────┐
            │     ◇ALERT REQUEST?◇
            │     └─────┬──────┘
            │           │    77
            │     ┌─────▼──────────────┐
            │     │FEED ALERT MEANS    │
            │     │DRIVE REQUEST TO    │
            │     │NOTIFICATION        │
            │     │CONTROL SECTION     │
            │     └─────┬──────────────┘
            │           │    78
            ├─────┌─────▼──────┐
            │     ◇DISPLAY REQUEST?◇
            │     └─────┬──────┘
            │      YES  │    79
            │     ┌─────▼──────────────┐
            │     │FEED MESSAGE DISPLAY│
            │     │REQUEST TO          │
            │     │NOTIFICATION        │
            │     │CONTROL SECTION     │
            │     └─────┬──────────────┘
            │           │    80
            └───────┌───▼───┐
                    │ END   │
                    └───────┘
```

13

# FIG. 2B

FROM STEP 63

| READ CHARACTER CONDITION OUT OF RAM 14 | 91 |

| READ NUMERAL CONDITION OUT OF RAM 14 | 92 |

| SEARCH FOR CHARACTER AND NUMERAL TRAIN OUT OF MESSAGE | 93 |

94 CONDITIONS SATISFIED ?

NO → 95 END

YES

| READ NOTIFYING MEANS OUT OF RAM 14 | 96 |

TO STEP 74
(FIG. 2A)

14

# FIG. 3A

| NETWORK  TROUBLE  OCCURRED |
|---|

# FIG. 3B

| TROUBLE |
|---|

# FIG. 4A

------NEC$ 151★TORAY$ 123★------

# FIG. 4B

| NEC≧150 |
|---|

# FIG. 5A

# FIG. 5B

# FIG. 6A

| Flag | N | E | C | Check bits(10bits) | Even Parity(1 bit) |
|---|---|---|---|---|---|
| I | OIIIOOI | IOIOOOI | IIOOOO | XXXXXXXXXX | X |

# FIG.6B

| Flag | C | $ | 1 | 5 | Check bits | Even Parity |
|---|---|---|---|---|---|---|
| I | I | OOIOOIO | OOOIIIO | IOIOI | XXXXXXXXX | X |

# FIG. 6C

| Flag | 5 | * | T | $\bar{O}$ | Check bits | Even Parity |
|---|---|---|---|---|---|---|
| I | IO | OIOIOIO | OOIOIOI | IIIIOO | XXXXXXXXX | X |

EP 0 317 230 B1

# FIG. 7

# FIG. 8